# EUROPÄISCHE PATENTSCHRIFT

(11) **EP 2 087 454 B1**
(45) Veröffentlichungstag und Bekanntmachung des Hinweises auf die Patenterteilung: **08.08.2012**
(21) Anmeldenummer: 07821888.0
(22) Anmeldetag: 26.10.2007
(51) Int. Cl.: G06K 1/12

(54) **VORRICHTUNG UND VERFAHREN ZUM EINBRINGEN VON INFORMATIONEN IN EINEN DATENTRÄGER**
DEVICE AND METHOD FOR RECORDING INFORMATION IN A DATA CARRIER
DISPOSITIF ET PROCÉDÉ POUR INSÉRER DES INFORMATIONS DANS UN SUPPORT DE DONNÉES

(30) Priorität: 07.11.2006 DE 102006052380
(43) Veröffentlichungstag der Anmeldung: 12.08.2009
(73) Patentinhaber: Mühlbauer AG, 93426 Roding (DE)
(72) Erfinder: WANJEK, Michael, 93149 Nittenau (DE); SCHWARZMEIER, Axel, 95100 Selb (DE)
(74) Vertreter: Schmidt, Steffen
(86) Internationale Anmeldenummer: PCT/EP2007/061527
(87) Internationale Veröffentlichungsnummer: WO 2008/055791

(56) Entgegenhaltungen:
- EP-A- 1 705 600
- US-A1- 2003 102 289

## Beschreibung

Die Erfindung betrifft eine Vorrichtung und ein Verfahren zum Einbringen von Informationen innerhalb eines Informationsflächenbereichs in einem Datenträger bestehend aus einer Trägerschicht und einer transparenten Kunststoffschicht mittels mindestens eines Laserstrahls einer punktartigen Laserquelle gemäß den Oberbegriffen der Patentansprüche 1 und 8.

Datenträger, wie z. B. Ausweiskarten, Kreditkarten, Bankkarten, Barzahlungskarten und dergleichen werden auf den verschiedensten Dienstleistungssektoren, beispielsweise im bargeldlosen Zahlungsverkehr sowie im innerbetrieblichen Bereich, in zunehmenden Maße eingesetzt. In Folge ihrer großen Verbreitung stellen sie einen typischen Massenartikel dar. Ihre Herstellung, d. h. die Fertigung des Kartenaufbaus und die Einbringung der kartenindividuellen Benutzerdaten muss einfach und kostengünstig sein.

Andererseits müssen die Karten so ausgebildet sein, dass sie im größtmöglichen Maße gegen Fälschung und Verfälschung geschützt sind.

Die vielen bereits auf dem Markt und sich noch im Entwicklungsstadium befindlichen Arten von Ausweiskarten zeigen, dass hierfür große Anstrengungen unternommen werden.

Aus EP 0 216 947 B1 sind Verfahren für Laserbearbeitungssysteme zur Herstellung von wackelbildartigen Effekten auf Laminatverbunden und von Kippbildern bekannt. Bei derartigen Verfahren wird im üblichen Kreditkartenformat ein Polycarbonat-Folienverbund von mehreren dünnen Folien mit dazwischen liegenden Sicherheitsdrucken mittels Lamination erzeugt.

Eine Schrift oder eine andere Art von Information wird in dem Kartenverbund mittels eines Laserstrahls eingeschrieben. Hierbei wird in einem Hochschmelzvorgang in einer Thermotransferpresse eine Oberseite der Karte mit einem sogenannten Linsenraster versehen. Die Oberkante des Linsenrasters wird bevorzugt in einer Ebene mit dem Kartenkörper angeordnet, so dass eine gewisse Schonung der Linsenoberfläche gegeben ist.

Durch die so gebildeten Linsen des Linsenrasters wird nun ein Laserstrahl in schräger Ausrichtung zur Kartenoberfläche gelenkt, der im Bereich der jeweiligen Linse fokussiert und auf einer bestimmten inneren Ebene der Karte gelenkt wird. In dieser Ebene werden definierte Schwärzungen erzeugt. Auf diese Weise können mindestens zwei von der Blickrichtung des Beobachters aus gesehen abhängige Echtheitsmerkmale in die Karte eingeschrieben werden.

Derartig hergestellte Karten erfordern nachteilhaft den zwingend erforderlichen Herstellungsschritt des Bewegens und Vorkippens der Karte und/oder des Lasers, um die Einstrahlung mit unterschiedlichen Winkeln für die Erzeugung eines Kippbildes zu ermöglichen. Somit sind derartige Datenträger zeit- und kostenaufwändig in ihrer Herstellung. Zudem entstehen durch die Bewegungsvorgänge von zumindest mehreren Bauelementen ungenaue Kippreliefbilder.

Aus der US 2003 / 0102289 A1 ist eine Vorrichtung mit einem Laserstrahl bekannt, welche die Beschriftung eines Gegenstandes von drei Seiten ermöglicht, ohne dass dessen Position verändert werden muss. Diese Vorrichtung hat einen Laserstrahler zur Abgabe eines Laserstrahls und zumindest ein Umlenkmittel, um den Laserstrahl von dem Laserstrahler auf einen Brennpunkt am Gegenstand abzubilden. Außerdem ist der Laserstrahler dazu ausgelegt, einen Laserstrahl unter zumindest zwei unterschiedlichen Austrittswinkeln abzugeben, wobei abhängig vom Austrittswinkel eines Laserstrahls aus dem Laserstrahler zumindest ein Laserstrahl einem Spiegel zugeordnet ist, so dass mindestens zwei verschiedene Seiten des Gegenstands ohne Positionsänderung des Gegenstands beschriftbar sind. In zumindest einem der Strahlengänge ist ein Spiegel vorgesehen, um die optische Weglängendifferenz zwischen dem ersten Strahlengang und dem weiteren Strahlengang auszugleichen.

Demzufolge liegt der vorliegenden Erfindung die Aufgabe zugrunde, eine Vorrichtung und ein Verfahren zum Einbringen von Informationen in einen Datenträger zur Verfügung zu stellen, welche/welches eine schnelle und einfache Einbringung eines Kipprelieffeldes in den Datenträger mittels mindestens eines Laserstrahls mit höherer Präzision ermöglicht.

Diese Aufgabe wird vorrichtungsseitig durch die Merkmale des Patentanspruches 1 und verfahrensseitig durch die Merkmale des Patentanspruches 8 gelöst.

Ein wesentlicher Punkt der Erfindung besteht darin, dass bei einer Vorrichtung zum Einbringen von Informationen innerhalb eines Informationsflächenbereichs in einem Datenträger bestehend aus einer Trägerschicht und einer transparenten Kunststoffschicht mittels mindestens eines Laserstrahls einer punktartigen Laserquelle mindestens eine Umlenkfläche, vorzugsweise eine Spiegelfläche zum Umlenken vorzugsweise zum Reflektieren des Laserstrahls vor dessen Auftreffen auf dem Datenträger angeordnet ist, wobei die mindestens eine Spiegelfläche in einem Bereich zwischen der Laserquelle und dem Datenträger und außerhalb eines durch gerade fiktive Verbindungslinien zwischen der Laserquelle und Randbereichen des Informationsflächenbereichs begrenzten bzw. definierten Zwischenbereichs angeordnet ist. Auf diese Art und Weise wird ermöglicht, dass die Laserquelle nicht oberhalb einer Oberfläche des Datenträgers hin und her verschoben werden muss oder bei stillstehender Laserquelle die darunter sich befindende Karte bzw. der Datenträger hin und her verschoben werden muss. Zudem wird eine teilweise oder vollständige Abschattung des Informationsflächenbereiches, in dem ein einzubringendes Kippreliefbild, wie beispielsweise ein Beschriftungsfeld angeordnet ist, verhindert. Dies ermöglicht ein schnelles und kostengünstiges Einbringen des Kippreliefbildes mit hoher Präzision, auch hinsichtlich der Ortsauflösung.

Zudem ist es vorteilhaft möglich, jede beliebige Position auf dem Informationsflächenbereich durch entsprechende Ausrichtung der Spiegelflächen, die auf vorzugsweise planar ausgebildeten Spiegelelementen angeordnet sind, anzuvisieren.

Alternativ oder zusätzlich können als Umlenkflächen Flächen von Prismen verwendet werden die den Laserstrahl umlenken anstatt ihn zu reflektieren.

Würde der Laserstrahl der Laserquelle nicht durch derartige Spiegel abgelenkt bzw. umgelenkt werden, um auf dem Informationsflächenbereich aufzutreffen, so wäre der Strahlungskegel des Laserstrahls mit einer Grundfläche im Bereich der Ebene des Datenträgers versehen, die größer als der eigentliche Informationsflächenbereich ist.

Erfindungsgemäß sind zwei bezüglich des Zwischenbereichs sich gegenüberliegende Spiegelflächen, die zum Informationsflächenbereich des Datenträgers hingeneigt sind, angeordnet. Auf diese Weise können aus zwei verschiedenen Richtungen die Laserstrahlen auf der Oberfläche des Datenträgers zur Erzeugung von Kippreliefbildern ankommen.

Entlang einer Verbindungslinie können zwei oder mehrere Spiegelflächen hintereinander angeordnet sein, um eine mehrmalige Ablenkung der Laserstrahlen und gegebenenfalls eine gleichzeitige Bearbeitung mehrerer Kippreliefsfeldbestandteile zu ermöglichen.

Vorzugsweise ist die Spiegelfläche um eine parallel zur Oberflächenebene des Datenträgers und/oder um eine senkrecht zur Oberflächenebene des Datenträgers sich erstreckende Achse schwenkbar gelagert. Hierdurch wird ein Verkippen der Spiegelfläche und ein fixiertes Einstellen eines bestimmten Kippwinkels der Spiegelfläche gegenüber der Horizontalen oder der Vertikalen zur Einarbeitung des Kippreliefbildes ermöglicht. Selbstverständlich kann während der Anwendung des/der Laserstrahl/Laserstrahlen auf die Oberfläche des Datenträgers eine Veränderung des Kippwinkels erfolgen, um eine fortlaufende Bearbeitung einzelner Abschnitte des Kipprelieffeldes zu ermöglichen.

Zeitgleich oder alternativ kann der Abstand zwischen der Spiegelfläche und der Oberfläche des Datenträgers verändert werden, um hierdurch eine vorbestimmbare Position auf dem Informationsflächenbereich mittels des umgelenkten Laserstrahles mit gewünschter Laserintensität zu erreichen.

Gemäß der Erfindung sind mindestens zwei durch verschiedene Umlenkflächen reflektierte Laserstrahlen aus unterschiedlichen Richtungen auf den Informationsflächenbereich zur Erzeugung des Kipprelieffeldes bzw. eines Kippbildes gerichtet. Hierfür sind die Umlenkflächen derart ausgebildet, dass sie auf eine gemeinsame Position auf der Oberfläche des Datenträgers auftreffen, um das Kippbild zu erzeugen.

Bei dem erfindungsgemäßen Verfahren wird vorteilhaft der mindestens eine Laserstrahl über mindestens eine Spiegelfläche vor dessen Auftreffen auf dem Datenträger derart umgelenkt, dass er auf der Oberfläche des Datenträgers auftrifft, ohne dass eine Spiegelfläche störend zwischen der Laserquelle und der Oberfläche des Datenträgers angeordnet ist.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung die Vorrichtung gemäß einer Ausführungsform der Erfindung, und
- Fig. 2: in einer schematischen Darstellung eine Vorrichtung gemäß einem Beispiel.

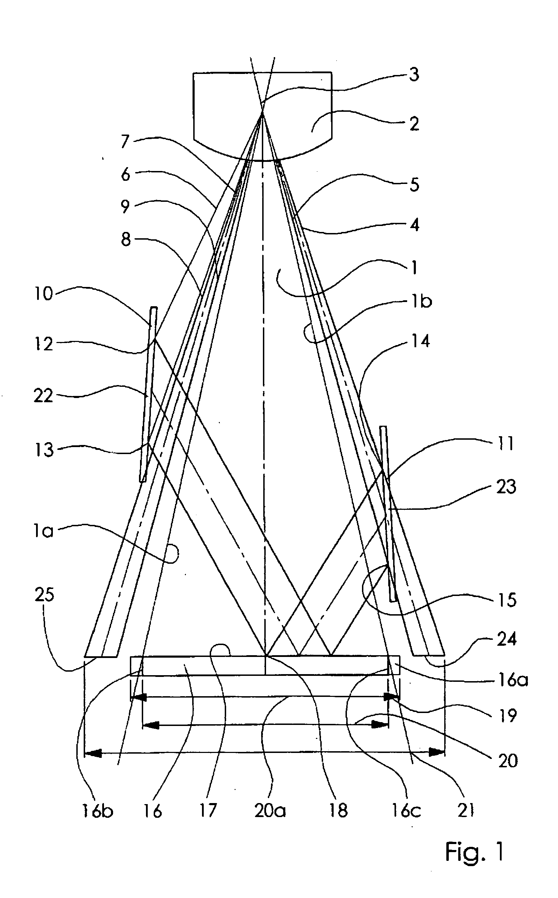

In Fig. 1 ist eine Laserquelle 2, die an einem Punkt 3 punktartig mindestens einen Laserstrahl ausstrahlt, derart angeordnet, dass sie einen Zwischenbereich 1, welcher durch Verbindungslinien 1a und 1b, welche die punktartige Laserquelle 2, 3 mit Randbereichen 16b, 16c eines Informationsflächenbereiches 16 eines Datenträgers 16a verbinden, mit dem Informationsflächenbereich 16 einschließt. Hierbei ist der Zwischenbereich 1 in dieser Darstellung dreieckförmig ausgebildet.

Die Laserstrahlen 4, 5 und 6, 7 werden im Gegensatz zu den Laserstrahlen 8, 9 an Biegeflächen 10, 11 in den Punkten 12, 13 und 14, 15 derart reflektiert, dass sie auf einer Oberfläche 17 des Datenträgers 16a und des Informationsflächenbereiches 16 in den Punkten 18, 19 aus verschiedenen Richtungen kommend auftreffen. Hierdurch kann ein Kipprelieffeld mit Kippbilderscheinungen erzeugt werden.

Der Informationsflächenbereich 16 weist ein Abmaß 20 auf, welches geringer als ein Abmaß 21 eines Laserfeldes ist, welches entstehen würde, wenn der Laserstrahl/die Laserstrahlen nicht durch Spiegelflächen abgelenkt werden würde/würden. Dies wird auch durch die durch nicht abgelenkte Laserstrahlen erzeugte Flächen 24, 25 verdeutlicht.

Um parallel zur Oberfläche des Datenträgers 16a angeordnete Schwenkachsen 22, 23 können die Spiegel bzw. Spiegelflächen derart geschwenkt werden, dass sie zur Oberfläche des Datenträgers 16a unterschiedliche Neigungswinkel aufweisen, um verschiedene Positionen des Informationsflächenbereiches 16 mit den abgelenkten Laserstrahlen zu erreichen.

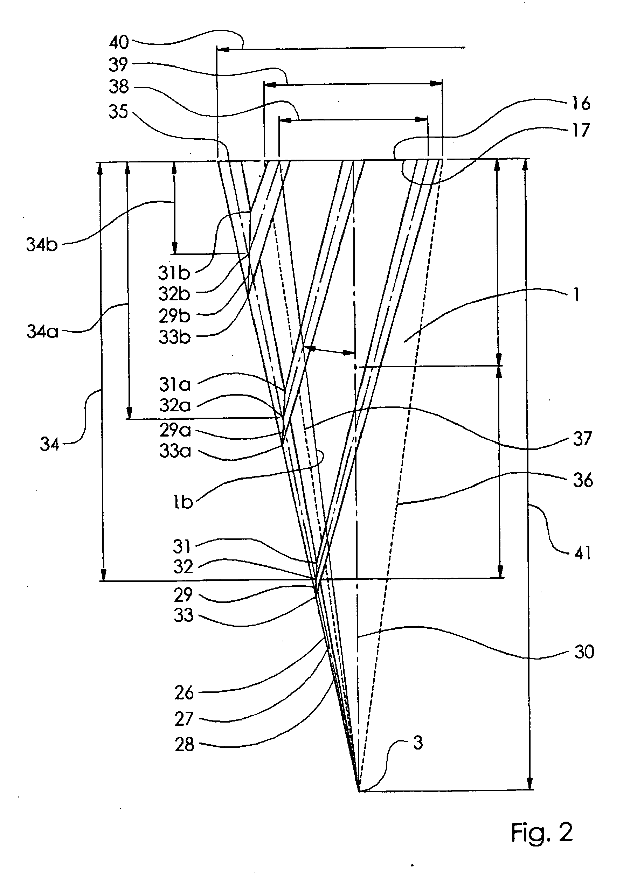

In Fig. 2 ist in einer schematischen Darstellung eine Vorrichtung gemäß einem beispiel gezeigt. In dieser Vorrichtung wird dargestellt, dass ein Spiegel 29, an dem Laserstrahlen 26, 27, 28 reflektiert werden, in verschiedenen Abständen 34, 34a und 34b zur Oberfläche 17 des Datenträgers 16a angeordnet sein kann. Dies wird durch die Bezugszeichen 29, 29a und 29b verdeutlicht.

An den verschiedenen Positionen weist der Spiegel 29, 29a und 29b die Reflektionspunkte 31, 32, 33 sowie 31a, 32a, 33a und 31b, 32b, 33b auf.

Bevorzugte Abstände zu der Oberfläche 17 des Datenträgers 16a sind bei dem Abstand 34 ca. 300 mm, bei dem Abstand 34a ca. 150 - 200 mm und bei dem Abstand 34b 30 - 80 mm.

Mit dem Bezugszeichen 30 wird die Mittellinie eines Laserstrahlkegels dargestellt.

Das Feld 35 gibt die Fläche eines auftreffenden Laserstrahles außerhalb des Informationsflächenbereiches 16 im nicht abgelenkten bzw. reflektierten Zustand wieder.

Durch die Linien 36, 37 wird ein Laserfeld 39 in der Ebene des Datenträgers 16a verdeutlicht. Dieses Laserfeld 39 ist größer als ein Beschriftungsfeld 38 bzw. der Informationsflächenbereich 16 mit dem Abmaß 38.

Mit dem Bezugszeichen 40 wird ein weiterer Laserflächenbereich angegeben. Die punktartige Laserquelle 2,3 weist gegenüber der Oberfläche des Datenträgers 16a einen Abstand 41 von beispielsweise 400 - 600 mm auf.

### Bezugszeichenliste

- 1: Zwischenbereich
- 1a, 1b, 1c: Verbindungslinien
- 2: Laserquelle
- 3: Laserquelle
- 4,5,6,7,8,9: Laserstrahl
- 10,11: Biegeflächen
- 12,13,14,15: Punkte
- 16: Informationsflächenbereich
- 16a: Datenträger
- 16b, 16c: Randbereiche
- 17: Oberfläche
- 18,19: Punkte
- 20,21: Abmaß
- 22,23: Schwenkachsen
- 24,25: Fläche
- 26,27,28: Laserstrahl
- 29: Spiegel
- 29a, 29b: Spiegelfläche
- 30: Mittellinie Laserstrahlkegel
- 31,: Reflektionspunkt
- 31a,31b,31c: Laserstrahl
- 32: Reflektionspunkt
- 33: Reklektionspunkt
- 33b: Laserstrahl
- 34,34a,34b: Abstände
- 35: Feld
- 36,37: Linien
- 38: Abmaß
- 39: Laserfeld
- 40: Laserflächenbereich
- 41: Abstand

## Patentansprüche

1. Vorrichtung zum Einbringen von Informationen innerhalb eines Informationsflächenbereichs (16) in einen Datenträger (16a) bestehend aus einer Trägerschicht und einer transparenten Kunststoffschicht mittels mindestens eines Laserstrahls (4 - 7; 26 - 28; 31 - 33; 31a - 33a; 31b- 33b) einer punktartigen Laserquelle (2, 3), mit mindestens einer Umlenkfläche (10, 11, 29, 29a, 29b) zum Umlenken des Laserstrahls (4 - 7; 26 - 28; 31 - 33; 31a - 33a; 31b - 33b) vor dessen Auftreffen auf dem Datenträger (16a), wobei die mindestens eine Umlenkfläche (10, 11, 29, 29a, 29b) in einem Bereich zwischen der Laserquelle (2, 3) und dem Datenträger (16a) und außerhalb eines durch fiktive gerade Verbindungslinien (1a, 1b, 1c) zwischen der Laserquelle (2, 3) und Randbereichen (16b, 16c) des Informationsflächenbereichs (16) definierten Zwischenbereichs (1) angeordnet ist, **dadurch gekennzeichnet, dass** mindestens zwei durch verschiedene Umlenkflächen reflektierte Laserstrahlen (4 - 7) aus unterschiedlichen Richtungen auf den Informationsflächenbereich (16) zur erzeugung eines Kippbildes gerichtet sind.

2. Vorrichtung nach Anspruch 1, **gekennzeichnet durch** zwei bezüglich des Zwischenbereichs (1) sich gegenüberliegende Umlenkflächen, insbesondere Spiegelflächen (10, 11), die zum Informationsflächenbereich (16) des Datenträgers (16a) hin geneigt sind.

3. Vorrichtung nach Anspruch 1 oder 2, **dadurch gekennzeichnet, dass** entlang einer der Verbindungslinien (1 a, 1 b, 1 c) zwei oder mehr Umlenkflächen, insbesondere Spiegelflächen (10, 11, 29, 29a, 29b) hintereinander angeordnet sind.

4. Vorrichtung nach einem der vorangegangenen Ansprüche, **dadurch gekennzeichnet, dass** die Umlenkflächen (10, 11, 29, 29a, 29b) um eine parallel zur Oberflächenebene (17) des Datenträgers (16a) und/oder um eine senkrecht zur Oberflächenebene (17) des Datenträgers (16a) sich erstreckende Achse (22, 23) schwenkbar sind.

5. Vorrichtung nach einem der vorangegangen Ansprüche, **dadurch gekennzeichnet, dass** der Abstand (34, 34a, 34b) der Umlenkflächen (29, 29a, 29b) zur Oberfläche (17) des Datenträgers (16a) veränderbar ist.

6. Vorrichtung nach einem der vorangegangenen Ansprüche, **dadurch gekennzeichnet, dass** die Umlenkflächen derart ausgebildet sind, dass die Laserstrahlen auf eine gemeinsame Position auf der Oberfläche des Datenträgers auftreffen.

7. Vorrichtung nach einen der Ansprüche 1 - 5, **dadurch gekennzeichnet, dass** die Umlenkflächen Flächen von Prismen sind.

8. Verfahren zum Einbringen von Informationen innerhalb eines Informationsflächenbereichs (16) in einen Datenträger (16a) bestehend aus einer Trägerschicht und einer transparenten Kunststoffschicht mittels mindestens eines Laserstrahls (4 - 7; 26 - 28; 31 - 33; 31a - 33a; 31b - 33b) einer punktartigen Laserquelle (2, 3), wobei
- der Laserstrahl (4 - 7; 26 - 28; 31 - 33; 31a - 33a; 31b - 33b) über mindestens eine Umlenkfläche, insbesondere eine Spiegelfläche (29, 29a, 29b) vor dessen Auftreffen auf dem Datenträger (16a) umgelenkt wird, wobei
- die mindestens eine Umlenkfläche (29, 29a, 29b) in einem Bereich zwischen der Laserquelle (2, 3) und dem Datenträger (16a) und außerhalb eines durch gerade fiktive Verbindungslinien (1 a, 1 b, 1 c) zwischen der Laserquelle (2,3) und Randbereiche (16b, 16c) des Informationsflächenbereichs (16) begrenzten Zwischenbereiches (1) angeordnet wird, und wobei
- wobei mindestens zwei durch verschiedene Umlenkflächen reflektierte Laserstrahlen (4 - 7) aus unterschiedlichen Richtungen auf den Informationsflächenbereich (16) zur Erzeugung eines Kippbildes gerichtet werden.

## Claims

1. Device for recording information within an information surface region (16) in a data carrier (16a) consisting of a carrier layer and a transparent plastic layer, wherein the device utilizes at least one laser beam (4-7; 26-28; 31-33; 31a-33a; 31b-33b) of a point-like laser source (2,3) comprising at least one deflection surface (10, 11, 29, 29a, 29b) for deflecting the laser beam (4-7; 26-28; 31-33; 31a-33a; 31b-33b) before it impinges on the data carrier (16a), wherein the at least one deflection surface (10, 11, 29, 29a, 29b) is arranged in a region between the laser source (2,3) and the data carrier (16a) and outside an intermediate region (1) defined by notional straight connection lines (1a, 1b, 1c) between the laser source (2,3) and edge regions (16b, 16c) of the information surface region (16), **characterized in that** at least two laser beams (4-7) reflected by different deflection surfaces are directed onto the information surface region (16) from different directions to generate a tilted image.

2. Device according to claim 1, **characterized by** two deflection surfaces, particularly mirrored surfaces (10, 11), located opposite one another with respect to the intermediate region (1) and which are inclined towards the information surface region (16) of the data carrier (16a).

3. Device according to claim 1 or 2, **characterized in that** at least two deflection surfaces, particularly mirrored surfaces (10, 11, 29, 29a, 29b), are arranged behind one another along one of the connection lines (1a, 1b, 1c).

4. Device according to one of the previous claims, **characterized in that** the deflection surfaces (10, 11, 29, 29a, 29b) are pivotable about an axis (22, 23) extending parallel to a surface plane (17) of the data carrier (16a) and/or extending perpendicular to a surface plane (17) of the data carrier (16a).

5. Device according to one of the previous claims, **characterized in that** the distance (34, 34a, 34b) of the deflection surfaces (29, 29a, 29b) from the surface (17) of the data carrier (16a) is variable.

6. Device according to one of the previous claims, **characterized in that** the deflection surfaces are designed in such a way that the laser beams strike the same position on the surface of the data carrier.

7. Device according to one of claims 1-5, **characterized in that** the deflection surfaces comprise surfaces of a prism.

8. Method for recording information within an information surface region (16) in a data carrier (16a) consisting of a carrier layer and a transparent plastic layer, the method utilizing at least one laser beam (4-7; 26-28; 31-33; 31a-33a; 31b-33b) of a point-like laser source (2,3), wherein
- the laser beam (4-7; 26-28; 31-33; 31a-33a; 31b-33b) is deflected via at least one deflection surface, particularly a mirrored surface (29, 29a, 29b), before it impinges on the data carrier (16a), wherein
- the at least one deflection surface (29, 29a, 29b) is arranged in a region between the laser source (2,3) and the data carrier (16a) and outside an intermediate region (1) bounded by notional straight connection lines (1a, 1b, 1c) between the laser source (2,3) and edge regions (16b, 16c) of the information surface region (16), and wherein
- wherein at least two laser beams (4-7) reflected by different deflection surfaces are directed onto the information surface region (16) from different directions to generate a tilted image.

## Revendications

1. Dispositif pour insérer des informations se trouvant à l'intérieur d'une zone de surface d'information (16) dans un support de données (16a) constitué d'une couche de support et d'une couche de plastique transparente au moyen d'au moins un rayon laser (4 à 7 ; 26 à 28 ; 31 à 33 ; 31a à 33a ; 31b à 33b) d'une source laser sous forme de point (2, 3), comprenant au moins une surface de déviation (10, 11, 29, 29a, 29b) pour dévier le rayon laser (4 à 7 ; 26 à 28 ; 31 à 33 ; 31a à 33a ; 31b à 33b) avant son impact sur le support de données (16a), ladite surface de déviation (10, 11, 29, 29a, 29b) étant disposée dans une zone comprise entre ladite source laser (2, 3) et ledit support de données (16a) et en dehors d'une zone intermédiaire (1) définie par des lignes de communication droites fictives (1a, 1b, 1c) entre la source laser (2, 3) et des zones périphériques (16b, 16c) de la zone de surface d'information (16), **caractérisé en ce qu'**au moins deux rayons laser (4 à 7) réfléchis par différentes surfaces de déviation sont dirigés sur la zone de surface d'information (16) à partir de différentes directions pour produire une image pivotante.

2. Dispositif selon la revendication 1, **caractérisé par** deux surfaces de déviation situées l'une en face de l'autre par rapport à ladite zone intermédiaire (1), en particulier deux surfaces miroitantes (10, 11) qui sont inclinées vers la zone de surface d'information (16) du support de données (16a).

3. Dispositif selon la revendication 1 ou 2, **caractérisé en ce que** deux surfaces de déviation ou plus, en particulier deux surfaces miroitantes (10, 11, 29, 29a, 29b) sont disposées l'une derrière l'autre le long d'une des lignes de communication (1a, 1b, 1c).

4. Dispositif selon l'une des revendications précédentes, **caractérisé en ce que** les surfaces de déviation (10, 11, 29, 29a, 29b) peuvent pivoter autour d'un axe (22, 23) s'étendant parallèlement au plan superficiel (17) du support de données (16a) et/ou un axe s'étendant perpendiculairement au plan superficiel (17) du support de données (16a).

5. Dispositif selon l'une des revendications précédentes, **caractérisé en ce que** l'écart (34, 34a, 34b) des surfaces de déviation (29, 29a, 29b) peut être modifié par rapport au plan superficiel (17) du support de données (16a).

6. Dispositif selon l'une des revendications précédentes, **caractérisé en ce que** les surfaces de déviation sont conçues de telle sorte que les rayons laser sont envoyés sur une position commune sur la surface du support de données.

7. Dispositif selon l'une des revendications 1 à 5, **caractérisé en ce que** les surfaces de déviation sont des surfaces de prismes.

8. Procédé pour insérer des informations se trouvant à l'intérieur d'une zone de surface d'information (16) dans un support de données (16a) constitué d'une couche de support et d'une couche de plastique transparente au moyen d'au moins un rayon laser (4 à 7 ; 26 à 28 ; 31 à 33 ; 31a à 33a ; 31b à 33b) d'une source laser sous forme de point (2, 3),
- le rayon laser étant dévié par au moins une surface de déviation, en particulier une surface miroitante (29, 29a, 29b) avant son impact sur le support de données (16a),
- la surface de déviation (29, 29a, 29b) étant disposée dans une zone comprise entre la source laser (2, 3) et le support de données (16a) et en dehors d'une zone intermédiaire (1) définie par des lignes de communication droites fictives (1a, 1b, 1c) entre la source laser (2, 3) et des zones périphériques (16b, 16c) de la zone de surface d'information (16),
- et au moins deux rayons laser (4 à 7) réfléchis par différentes surfaces de déviation étant dirigés sur la zone de surface d'information (16) à partir de différentes directions pour produire une image pivotante.
